(19) Europäisches Patentamt
European Patent Office
Office européen des brevets

(11) **EP 4 347 342 B1**

(12) **FASCICULE DE BREVET EUROPEEN**

(45) Date de publication et mention
de la délivrance du brevet:
**05.08.2026   Bulletin 2026/32**

(21) Numéro de dépôt: **22731239.4**

(22) Date de dépôt: **01.06.2022**

(51) Classification Internationale des Brevets (IPC):
**B60W 50/00** (2006.01)      **B60W 30/045** (2012.01)
**B60W 30/18** (2012.01)

(52) Classification Coopérative des Brevets (CPC):
**B60W 30/045; B60W 30/18145;** B60W 2050/0034;
B60W 2510/207; B60W 2520/125; B60W 2520/14;
B60W 2530/20; B60W 2530/201; B60W 2540/10;
B60W 2540/18; B60W 2710/083; B60W 2720/14;
B60W 2720/40; B60W 2720/406

(86) Numéro de dépôt international:
**PCT/EP2022/064970**

(87) Numéro de publication internationale:
**WO 2022/253923 (08.12.2022 Gazette 2022/49)**

(54) **SYSTÈME DE VECTORISATION DE COUPLE, PROCÉDÉ ET VÉHICULE ASSOCIÉ**

DREHMOMENTVEKTORISIERUNGSSYSTEM, VERFAHREN UND ZUGEHÖRIGES FAHRZEUG

TORQUE VECTORING SYSTEM, METHOD AND ASSOCIATED VEHICLE

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité:  03.06.2021  FR 2105861

(43) Date de publication de la demande:
**10.04.2024   Bulletin 2024/15**

(73) Titulaire: **Ampere SAS**
**92100 Boulogne-Billancourt (FR)**

(72) Inventeurs:
• **CHAUDET, Michel**
**91650 Breuillet (FR)**
• **FONTAINE, Sebastien**
**78180 Montigny le Bretonneux (FR)**
• **GHILLEBAERT, Olivier**
**94230 CACHAN (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**EP-B1- 2 576 298     US-A1- 2021 046 922**

• **KOEHLER STEFAN ET AL: "Energy-Efficiency Optimization of Torque Vectoring Control for Battery Electric Vehicles", IEEE INTELLIGENT TRANSPORTATION SYSTEMS MAGAZINE, IEEE, USA, vol. 9, no. 3, 1 October 2017 (2017-10-01), pages 59 - 74, XP011660611, ISSN: 1939-1390, [retrieved on 20170725], DOI: 10.1109/ MITS.2017.2709799**
• **ZHAI LI ET AL: "Electronic Stability Control Based on Motor Driving and Braking Torque Distribution for a Four In-Wheel Motor Drive Electric Vehicle", IEEE TRANSACTIONS ON VEHICULAR TECHNOLOGY, IEEE, USA, vol. 65, no. 6, 1 June 2016 (2016-06-01), pages 4726 - 4739, XP011614331, ISSN: 0018-9545, [retrieved on 20160616], DOI: 10.1109/TVT.2016.2526663**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 347 342 B1

**Description**

La présente invention concerne un système de vectorisation de couple entre deux roues d'un pont arrière d'un véhicule automobile électrique.

La présente invention concerne plus particulièrement un système de vectorisation de couple entre deux roues d'un pont arrière d'un véhicule automobile électrique disposées de part et d'autre du véhicule et entraînées chacune par un moteur électrique pour répartir un couple entre les deux roues, un procédé de mise en œuvre d'un tel système et un véhicule automobile électrique comportant des moteurs électriques entraînant les roues arrière et pilotés par ledit système.

Généralement un véhicule automobile électrique comprend une batterie de traction dimensionnée pour garantir une autonomie suffisante du véhicule.

Une telle batterie est généralement lourde de sorte que la masse additionnelle de la batterie alourdit de façon notable la masse du véhicule.

Cette masse additionnelle dégrade le comportement routier du véhicule, notamment l'agilité d'un véhicule sportif de sorte que les sensations éprouvées par le conducteur sont dégradées.

Il est donc nécessaire d'améliorer le comportement routier du véhicule en toute sécurité pour le conducteur.

Il est connu de répartir de manière inégale un couple d'entraînement délivré à l'avant ou à l'arrière du véhicule (procédé de vectorisation d'un couple) pour créer un couple de lacet lors d'un virage afin d'améliorer le comportement routier du véhicule.

Le couple d'entraînement peut également être délivré de manière inégale sur les deux roues d'un même essieu.

Le document EP2611661 divulgue un procédé de commande d'un mécanisme de vectorisation de couple pour répartir le couple entre une roue droite et une roue gauche d'après une valeur finale de commande de couple.

La valeur finale de commande de couple est égale à la différence entre une première valeur de commande dépendante d'un taux de lacet et d'un taux de lacet de consigne, et une deuxième valeur de commande dépendante d'une valeur de glissement combinée des deux roues.

Cependant le procédé ne régule pas le glissement relatif des roues et ne prévoit pas une régulation en boucle fermée de la vitesse de lacet du véhicule de sorte que le comportement du véhicule n'est pas sécuritaire dans toutes les situations et dégrade la stabilité véhicule, le procédé pouvant entraîner le véhicule dans une manœuvre dite de « tête à queue ». Les documents EP 2 576 298 B1 et US 2021/0046922 A1 divulguent des systèmes de commande comparables.

Il est donc proposé de pallier tout ou partie des inconvénients des dispositifs de vectorisation de couple d'un véhicule électrique selon l'état de la technique, notamment en améliorant la stabilité dudit véhicule.

Au vu de ce qui précède, l'invention a pour objet un procédé de vectorisation de couple entre deux roues d'un pont arrière d'un véhicule automobile électrique disposées de part et d'autre du véhicule et entraînées chacune par un moteur électrique pour répartir un couple entre les deux roues tel que défini par la revendication indépendante 1.

De préférence, la détection du survirage ou du sous-virage du véhicule dans un virage et en phase d'accélération comprend :

- la détermination d'une consigne de vitesse de lacet à partir d'un modèle de bicyclette du véhicule,
- la détermination d'une première différence entre la valeur absolue de la vitesse de consigne de lacet et la valeur absolue de la vitesse de lacet,
- la comparaison de la première différence à un seuil, et
- la détermination du survirage ou du sous-virage du véhicule selon le résultat de la comparaison.

Avantageusement, si la première différence est supérieure ou égale au seuil, le véhicule est sous-vireur, et si la différence est inférieure au seuil, le véhicule est survireur.

De préférence, la génération des premier et deuxième couples correctifs de patinage comprend la détermination d'une deuxième différence entre la vitesse de consigne de lacet et la vitesse de lacet,

- si la deuxième différence est incluse dans un intervalle de détection défini par deux seuils de détection de signe opposé ou le véhicule n'est pas en phase d'accélération, les premier et deuxième couples correctifs de patinage sont nuls,
- si la deuxième différence n'est pas incluse dans l'intervalle de détection, le procédé comprend :

  ○ la régulation en boucle fermée d'un couple de correction de patinage à partir de la deuxième différence de sorte que le deuxième écart soit nul, un couple correctif de patinage étant égal au couple de correction lorsque la deuxième différence est nulle, et
  ○ la sélection de l'une des roues arrières sur laquelle est destinée à être soustrait le couple de correction de patinage en fonction du survirage ou du sous-virage du véhicule et de l'accélération transversale du véhicule, le premier couple correctif de patinage étant égal au couple correctif de patinage et le deuxième couple correctifs de patinage étant nul si la première roue est sélectionnée, et inversement si la deuxième roue est sélectionnée.

Avantageusement, la sélection de la roue arrière sur laquelle est soustrait le couple correctif de patinage comprend la détermination de la roue arrière intérieure au virage et de la roue extérieure au virage en fonction du signe de l'accélération transversale dans laquelle si l'accélération transversale est positive selon un axe de référence orienté vers la gauche du véhicule dans le sens normal de roulage, la roue arrière extérieure est la roue arrière droite coïncidente avec la deuxième roue dans le sens normal de roulage du véhicule et la roue arrière intérieure est la roue arrière gauche coïncidente avec la première roue, et inversement si l'accélération transversale est négative selon l'axe de référence, le couple correctif de patinage étant destiné à être soustrait à la roue extérieure si le véhicule est survireur et à la roue intérieure si le véhicule est sous-vireur.

De préférence, la détermination d'une première consigne de couple corrigée et la détermination d'une deuxième consigne de couple corrigée comprend :

- le calcul d'une première consigne intermédiaire égal à la soustraction du premier couple correctif de glissement et du premier couple correctif de patinage à la première consigne de couple,
- le calcul d'une deuxième consigne intermédiaire égal à la soustraction du deuxième couple correctif de glissement et du deuxième couple correctif de patinage à la deuxième consigne de couple, et dans lequel :
- si le véhicule est dans une phase d'accélération, la détermination d'une première valeur minimale entre la première consigne intermédiaire et la valeur de couple maximale délivrée par le premier moteur électrique, puis la détermination d'une première valeur maximale entre la première valeur minimale et zéro, la première consigne de couple corrigée étant égale à la première valeur maximale, et la détermination d'une deuxième valeur minimale entre la deuxième consigne intermédiaire et la valeur de couple maximale délivrée par le deuxième moteur électrique, puis la détermination d'une deuxième valeur maximale entre la deuxième valeur minimale et zéro, la deuxième consigne de couple corrigée étant égale à la deuxième valeur maximale,
- si le véhicule est dans une phase de décélération, la détermination d'une première valeur maximale entre la première consigne intermédiaire et la valeur de couple minimale délivrée par le premier moteur électrique, puis la détermination d'une première valeur minimale entre la première valeur maximale et zéro, la première consigne de couple corrigée étant égale à la première valeur minimale, et la détermination d'une deuxième valeur maximale entre la deuxième consigne intermédiaire et la valeur de couple minimale délivrée par le deuxième moteur électrique, puis la détermination d'une deuxième valeur minimale entre la deuxième valeur maximale et zéro, la deuxième consigne de couple corrigée étant égale à la deuxième valeur minimale.

L'invention a également pour objet un système de vectorisation de couple entre deux roues tel que défini par la revendication indépendante 8.

- des troisièmes moyens de génération d'un premier couple

L'invention a encore pour objet un véhicule automobile électrique comportant un pont arrière muni de deux roues disposées de part et d'autre du véhicule, deux moteurs électriques entraînant chacun une roue arrière, et un système de vectorisation de couple tel que défini précédemment et relié aux deux moteurs électriques.

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1]

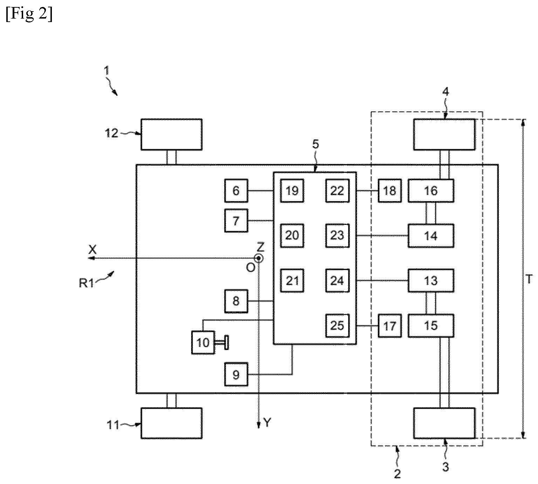

[Fig 2] illustrent schématiquement un véhicule automobile électrique selon l'invention ;
[Fig 3]
[Fig 4]
[Fig 5]
[Fig 6]
[Fig 7]
[Fig 8]
[Fig 9]
illustrent un mode de mise en œuvre d'un système de vectorisation de couple selon l'invention.

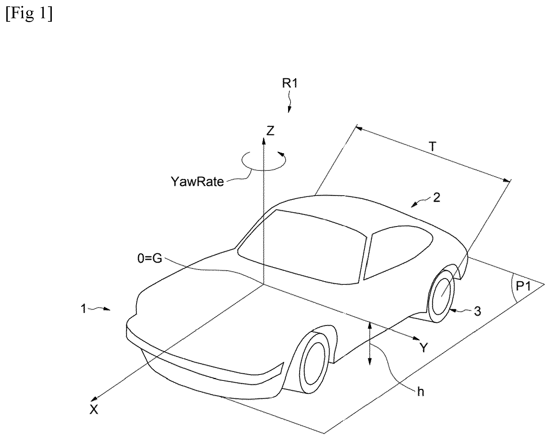

La figure 1 illustre un véhicule automobile électrique 1 orienté selon un repère orthonormé R1(O, X, Y, Z) et posé sur un plan P1 représentant une voie de circulation.

Le repère R1 comprend une origine O, un premier axe X orienté selon une direction arrière-avant du véhicule 1, un deuxième axe Y selon une direction transversale du véhicule et orienté vers la gauche du véhicule 1 dans le sens normal de roulage du véhicule 1, et un troisième axe Z selon une direction verticale du véhicule.

L'origine O du repère R1 est confondu avec le centre de gravité G du véhicule 1 disposé à une distance h par rapport au point de contact des pneumatiques sur la voie de circulation P1 selon l'axe Z.

Le pont arrière 2 du véhicule 1 comprend deux roues 3, 4 disposées de part et d'autre du véhicule et entraînées chacune par un moteur électrique 5, 6 (non visible).

Les roues 3, 4 sont séparées par la voie arrière T du véhicule 1.

Une première roue 3 est disposée du côté gauche du véhicule 1 et la deuxième roue 4 est disposée du côté droit du véhicule 1 dans le sens normal de roulage du véhicule 1.

La distance h et la voie arrière T sont mesurées en mètre.

On pose YawRate la vitesse de rotation du véhicule 1 selon l'axe Z ou vitesse de lacet, et comptée positivement lorsque le véhicule 1 est en rotation vers la gauche du véhicule 1 dans le sens normal de roulage et négativement dans l'autre sens. La vitesse de rotation YawRate du véhicule 1 selon l'axe Z et mesurée en rad/s.

Soit gammat l'accélération transversale du véhicule 1 selon l'axe Y et comptée positivement lorsqu'elle dirigée vers la gauche du véhicule 1 dans le sens normal de roulage. L'accélération transversale gammat est mesurée en m/s$^2$.

On note g la constante gravitationnelle.

La figure 2 illustre le véhicule 1 comprenant pont arrière 2, un système de vectorisation de couple 5 entre les deux roues arrière 3, 4, un capteur d'accélération 6 mesurant l'accélération transversale gammat du véhicule 1 et un capteur de vitesse de rotation 7 mesurant la vitesse de rotation YawRate du véhicule 1 reliés au système 5, un dispositif de consigne 8 d'accélération et un capteur de vitesse 9 du véhicule relié au système 5.

Le dispositif de consigne 8 d'accélération comprend par exemple une pédale d'accélérateur manipulée par le conducteur du véhicule 1 et délivrant une consigne de couple DvTq-Req d'accélération ou décélération du véhicule 1.

On note que lorsque DvTq-Req est de valeur positive, le dispositif de consigne 8 délivre une consigne de couple d'accélération et dans le cas contraire une consigne de couple de décélération.

Le véhicule 1 comprend en outre un volant de direction 10 pour orienter les roues avant 11 et 12 du véhicule 1, et qui délivre un angle de rotation du volant av au système 5 mesuré en degrés par rapport à sa position neutre compté positivement dans le sens de rotation trigonométrique et négativement dans le sens contraire.

Les roues avant 11 et 12 ne sont pas motrice.

Selon un autre mode de réalisation, le véhicule 1 comprend un moteur électrique entraînant les roues avant 11, 12 par l'intermédiaire d'un différentiel, la consigne de couple DvTq-Req est alors répartie sur les roues avant et arrière du véhicule.

Le pont arrière 2 comprend un premier et un deuxième moteurs électriques 13, 14 pilotés par le système 5 et entraînant respectivement la première et la deuxième roues arrière 3, 4 par l'intermédiaire d'un premier et deuxième différentiels 15, 16.

On suppose dans ce qui suit que les différentiels 15, 16 ont un même rapport cinématique kgear.

En variante, les différentiels 15, 16 peuvent avoir des rapports cinématiques différents.

Le pont 2 comprend en outre un premier et un deuxième capteurs 17, 18 de vitesse de rotation délivrant respectivement la vitesse de rotation du premier et du deuxième moteur 13, 14 au système 5.

Le système 5 répartit un couple de traction du véhicule 1 entre les deux roues arrière 3, 4, et comprend :

- des premiers moyens de génération 19 d'une première consigne de couple C_RL appliquée sur la première roue 3 et d'une deuxième consigne de couple C_RR appliquée sur la deuxième roue 4 à partir de la consigne d'accélération DvTq-Req du véhicule, de la vitesse V du véhicule, de l'angle volant av, de la distance T entre les deux roues arrière 3, 4, de l'accélération transversale gammat, et des caractéristiques de couple développé par chaque moteur 13, 14,
- des deuxièmes moyens de génération 20 d'un premier couple correctif de glissement C_RL_bf1 destiné à être appliqué sur la première roue 3 et d'un deuxième couple correctif C_RR_bf1 de glissement destiné à être appliqué sur la deuxième roue 4 pour supprimer un glissement relatif entre les deux roues 3, 4 à partir de la distance T entre les roues 3, 4, la vitesse de lacet du véhicule YawRate, le régime de chaque moteur électrique 13, 14, le rapport kgear et le type de pneumatique monté sur les roues 3, 4,
- des moyens de détection 21 du survirage ou du sous-virage du véhicule 1 dans un virage en phase d'accélération à partir d'une consigne de vitesse de lacet YawRateT et de la vitesse de lacet YawRate,
- des troisièmes moyens de génération 22 d'un premier couple correctif de patinage C_RL_bf2 destiné à être appliqué sur la première roue 3 et un deuxième couple correctif de patinage C_RR_bf2 destiné à être appliqué sur la deuxième roue 4 pour neutraliser le survirage ou le sous-virage du véhicule 1 à partir de la consigne de vitesse de lacet YawRateT, de la vitesse de lacet YawRate et de l'accélération transversale gammat,
- des moyens de détermination 23 d'une première consigne de couple corrigée C_RRL à partir de la première consigne de couple C_RL, du premier couple correctif de glissement C_RL_bf1 et du premier couple correctif de patinage C_RL_bf2, et la détermination d'une deuxième consigne de couple corrigée C_RRR à partir de la deuxième consigne de couple C_RR, du deuxième couple correctif de glissement C_RR_bf1 et du deuxième couple correctif de patinage C_RR_bf2, et

- des moyens de pilotage 24 de la première machine électrique 13 à partir de la première consigne de couple corrigée C_RRL et le pilotage de la deuxième machine électrique 14 à partir de la deuxième consigne de couple corrigée C_RRR.

Le système 5 comprend en outre une unité de traitement 25 mettant en œuvre les premiers, deuxièmes et troisièmes moyens de génération 19, 20, 22, les moyens de détection 21, les moyens de détermination 23 et les moyens de pilotage 24.

On suppose que la consigne d'accélération DvTq-Req pilote exclusivement le pont arrière 2.

Les caractéristiques de couple développé par chaque moteur 13, 14 comprennent le couple maximal et le couple minimal de chaque moteur électrique.

On note Cmax13 et Cmin13 le couple maximal et le couple minimal développés par le premier moteur 13, et Cmax14 et Cmin14 le couple maximal et le couple minimal développés par le deuxième moteur 14.

On suppose que les roues arrière 3, 4 sont équipées de pneumatiques ayant un rayon sous charge Rwheel mesuré en mètre.

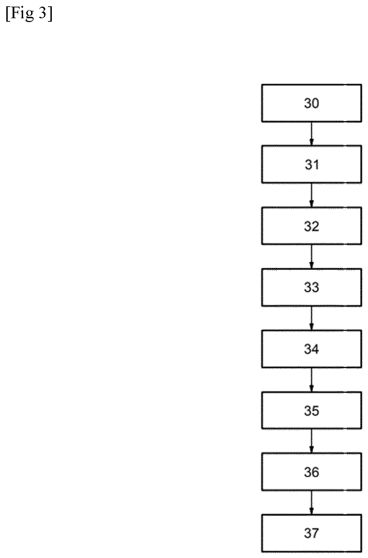

Les figures 3 à 9 illustrent un exemple de mise en œuvre du système 5.

On suppose que le dispositif de consigne 7 d'accélération délivre la consigne de couple DvTq-Req de valeur positive.

Les premiers moyens de génération 19 génèrent la première consigne de couple C_RL appliquée sur la première roue 3 et la deuxième consigne de couple C_RR appliquée sur la deuxième roue 4 (figure 3, étapes 30 à 37).

Les consignes de couple C_RL et C_RR sont générées de sorte qu'un surplus de couple est apporté à la roue arrière la plus chargée et un couple est retiré de la roue arrière la moins chargée, par exemple lorsque le véhicule 1 est dans un virage, la roue extérieure au virage étant la roue la plus chargée et la roue intérieure au virage étant la roue la moins chargée.

Durant l'étape 30, les premiers moyens de génération 19 déterminent un premier facteur de couple de correction alpha à partir d'une table de données selon la vitesse V du véhicule 1 et l'angle de volant av, et variant entre 0 et 1.

La table de données est par exemple déterminée à partir d'essais préalables réalisés dans des conditions de haute adhérence du véhicule 1 généralement sur sol sec pour déterminer des valeurs de facteur de couple de correction assurant une stabilité correcte du véhicule 1 dans ces conditions.

Durant l'étape 31, les premiers moyens de génération 19 déterminent un ratio de transfert de charge ratio_transfert :

$$ratio\_transfert = 2 \cdot h \cdot \frac{abs(gammat)}{T \cdot g} \qquad (1)$$

où abs() est la fonction valeur absolue.

Le ratio de transfert de charge ratio_transfert représente une fraction de la masse du véhicule 1 s'exerçant sur la roue arrière extérieure du véhicule 1 sous l'effet de l'accélération centrifuge dans le virage, et la fraction de masse retirée de la roue intérieure.

Durant une étape 32, les premiers moyens de génération 19 déterminent si le véhicule 1 est soumis à un braquage franc.

Les premiers moyens 19 comparent le produit de la valeur de l'angle volant av par l'accélération transversale gammat à un seuil de braquage par exemple égal à -10 °.m/s².

Si le produit calculé est supérieur au seuil de braquage, un booléen BRAQ égal à 1 est représentatif d'un braquage franc. Dans le cas contraire, le booléen BRAQ est égal à 0, le véhicule 1 étant en contre braquage ou le volant étant quasiment en position neutre.

Durant l'étape 33, les premiers moyens 19 déterminent un deuxième facteur de correction de couple alpha1 :

$$alpha1 = \min(alpha, ratio\_transfert) \cdot BRAQ \qquad (2)$$

où min() sélectionne la valeur minimale parmi les valeurs alpha et ratio_transfert afin de prendre en compte des conditions d'adhérence moyennes du véhicule 1 par exemple lorsqu'il évolue sur une route mouillée ou gelée de sorte que le transfert de couple entre la roue arrière la plus chargée et la moins chargée ne déstabilise pas le véhicule 1.

Durant une étape 34, les premiers moyens 19 déterminent des consignes de couple en boucle ouverte C_Ro_bo et C_Ri_bo à appliquer respectivement sur les roues arrière extérieure et intérieure :

$$C\_Ro\_bo = \frac{DvTq-Req}{2} \cdot (1 + alpha1) \quad (3)$$

$$C\_Ri\_bo = C\_Ro\_bo - 2 \cdot \frac{DvTq-Req}{2} \cdot alpha1 \quad (4)$$

Durant une étape 35, les premiers moyens 19 associent la roue arrière extérieure à l'une des roues arrière 3, 4 du véhicule 1 et la roue arrière intérieure à l'autre roue arrière 3, 4, et limitent les consignes de couple en boucle ouverte C_Ro_bo et C_Ri_bo aux caractéristiques de couple développé par chaque moteur 13, 14.

Si l'angle volant av est positif (braqué dans le sens trigonométrique), la roue extérieure coïncide avec la deuxième roue arrière 4 et la roue intérieure coïncide avec la première roue arrière 3.

Les consignes maximales C_Ro_max et C_Ri_max des consignes C_Ro_bo et C_Ri_bo sont égales à :

$$C\_Ro\_max = Cmax14 \quad (5)$$

$$C\_Ri\_max = Cmax13 \quad (6)$$

et les consignes minimales C_Ro_min et C_Ri_min des consignes C_Ro_bo et C_Ri_bo sont égales à :

$$C\_Ro\_min = Cmin14 \quad (7)$$

$$C\_Ri\_min = Cmin13 \quad (8)$$

Si l'angle volant av est négatif (braqué dans le sens anti-trigonométrique), la roue extérieure coïncide avec la première roue arrière 3 et la roue intérieure coïncide avec la deuxième roue arrière 4.

Les consignes maximales C_Ro_max et C_Ri_max des consignes C_Ro_bo et C_Ri_bo sont égales à :

$$C\_Ro\_max = Cmax13 \quad (9)$$

$$C\_Ri\_max = Cmax14 \quad (10)$$

et les consignes minimales C_Ro_min et C_Ri_min des consignes C_Ro_bo et C_Ri_bo sont égales à :

$$C\_Ro\_min = Cmin13 \quad (11)$$

$$C\_Ri\_min = Cmin14 \quad (12)$$

Durant une étape 36, les premiers moyens 19 déterminent des couples en boucle finale C_Ro_final et C_Ri_final tels que :

$$C\_Ro\_final = \max\left(\min(C\_Ro\_bo, C\_Ro\_max), C\_Ro\_min\right) \quad (13)$$

$$C\_Ri\_final = \max\left(min\left(C\_Ro\_final - 2 \cdot \frac{DvTq - Req}{2} \cdot alpha1, C\_Ri\_max\right), C\_Ri\_min\right) \quad (14)$$

En variante,

$$C\_Ri\_final = \max(min(C\_Ro\_bo, C\_Ri\_max), C\_Ri\_min) \quad (15)$$

Durant l'étape 37, si l'angle volant av est positif (braqué dans le sens trigonométrique, les premiers moyens de génération 19 génèrent la première consigne de couple C_RL et la deuxième consigne de couple C_RR de sorte que :

$$C\_RL = C\_Ri\_final \quad (16)$$

$$C\_RR = C\_Ro\_final \quad (17)$$

et si l'angle av est négatif de sorte que :

$$C\_RL = C\_Ro\_final \quad (18)$$

$$C\_RR = C\_Ri\_final \quad (19)$$

Les deuxièmes moyens de génération 20 génèrent le premier couple correctif de glissement C_RL_bf1 et le deuxième couple correctif de glissement C_RR_bf1 pour supprimer un glissement relatif entre les roues arrière 3, 4 se produisant par exemple lorsque chaque roue arrière évolue chacune sur une partie de la voie de circulation présentant des valeurs d'adhérence différentes.

Les deuxièmes moyens de génération 20 permettent d'assurer la stabilité du véhicule 1 en ligne droite en situation d'adhérence différente entre les deux roues arrière 3, 4.

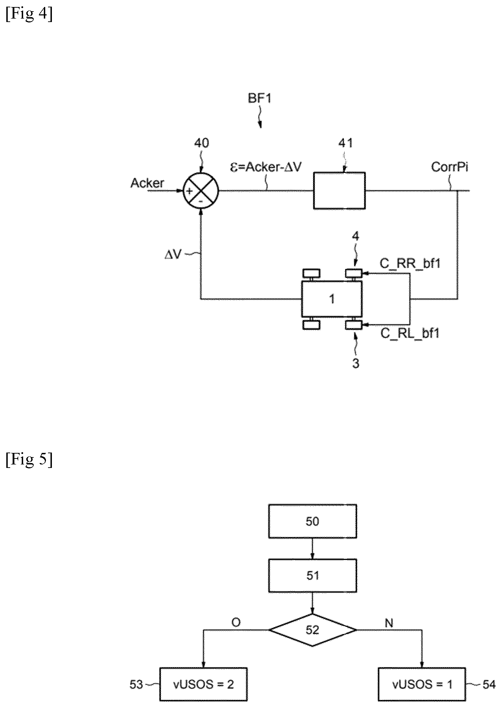

Les deuxièmes moyens de génération 20 comprennent une première boucle de régulation fermée BF1 illustré à la figure 4.

La première boucle de régulation fermée BF1 comporte un sommateur 40 et un régulateur 41 du type proportionnel intégral.

Les paramètres du régulateur 41 (le gain de l'action proportionnel et le gain de l'action intégrale) sont déterminés empiriquement par des essais réalisés sur le véhicule 1.

Les deuxièmes moyens 20 déterminent un coefficient d'Acker égal à la consigne de la boucle de régulation BF1 appliqué sur une entrée d'addition du sommateur 40, et égal à :

$$Acker = T \cdot YawRate \quad (20)$$

où T est la voie du pont arrière 2 et YawRate est la vitesse de lacet du véhicule 1.

Le coefficient d'Acker représente l'écart de vitesse normal entre les deux roues arrière droite 3 et gauche 4 lorsqu'aucune des deux ne glisse ou si les deux roues glissent de manière identique.

Les deuxièmes moyens 20 déterminent en permanence l'écart de vitesse réel $\Delta V$ entre la roue arrière gauche 3 et la roue arrière droite 4 :

$$\Delta V = \frac{RmotRL - RmotRR}{kgear} \cdot Rwheel \quad (21)$$

où RmotRL est la vitesse de rotation du premier moteur électrique 13, RmotRR est la vitesse de rotation du deuxième moteur électrique 14, kgear est le rapport cinématique et Rwheel est le rayon sous charge.

L'écart de vitesse réel $\Delta V$ est appliqué sur une entrée de soustraction du sommateur 40.

Le régulateur 41 détermine un couple correctif de glissement CorrPI à partir de l'écart $\varepsilon$ entre le coefficient d'Acker et l'écart de vitesse réel $\Delta V$ de sorte que l'écart $\varepsilon$ soit nul.

Le couple correctif de glissement CorrPI permet de déterminer le premier couple correctif de glissement C_RL_bf1 et le deuxième couple correctif C_RR_bf1 de glissement appliqués sur les roues arrière 3, 4.

Le premier couple correctif de glissement C_RL_bf1 est égal à :

$$C\_RL\_bf1 = \max\left(corrPI, \max((-G \cdot corrPI - Ctr) \cdot Acclim, 0)\right) \quad (22)$$

et le deuxième couple correctif C_RR_bf1 de glissement est égal à :

$$C\_RR\_bf1 = \max\left(-corrPI, \max((G \cdot corrPI - Ctr) \cdot Acclim, 0)\right) \quad (23)$$

où G est un ratio de la correction du transfert de couple, Ctr est une constante de transfert de couple et Acclim est une limitation dépendante de l'accélération transversale. G, Ctr et Acclim sont déterminés par des essais.

La première boucle de régulation BF1 retire une partie du couple appliqué sur la roue arrière qui glisse le plus par rapport à l'autre roue arrière, et retire une fraction du couple retiré sur la roue qui glisse de l'autre roue afin d'améliorer la stabilité du véhicule 1 en ligne droite.

Si la consigne de couple DvTq-Req est de valeur négative (décélération), le premier couple correctif de glissement C_RL_bf1 et le deuxième couple correctif de glissement C_RL_bf1 sont de valeurs nulles.

Les moyens de détection 21 et les troisièmes moyens de génération 22 permettent d'empêcher les roues arrière 3, 4 de patiner afin de garantir la stabilité du véhicule 1 dans un virage en réduisant le couple sur l'une des roues arrière.

Si la consigne de couple DvTq-Req est de valeur négative ou le véhicule 1 n'est pas dans un virage, le premier couple correctif de patinage C_RL_bf2 et le deuxième couple correctif de patinage C_RR_bf2 déterminés par les troisièmes moyens de génération 22 sont de valeurs nulles.

Les moyens de détection 21 détectent un survirage ou un sous-virage du véhicule 1 à partir d'une consigne de vitesse de lacet YawRateT et de la vitesse de lacet YawRat (figure 5, étapes 50 à 54).

Durant une étape 50, les moyens de détection 21 déterminent une consigne de vitesse de lacet YawRateT à partir d'un modèle de bicyclette du véhicule 1. On note que le modèle bicyclette est connu en soi.

La consigne de vitesse de lacet YawRateT représente une trajectoire neutre du véhicule 1 dans le virage, le véhicule 1 n'étant pas survireur, ni sous-vireur.

Il est connu que pour des valeurs élevées de l'angle volant av, par exemple supérieures à 200° à gauche ou à droite, la vitesse de lacet de consigne YawRateT déterminée par le modèle de bicyclette est surestimée. Afin de corriger cette surestimation, la vitesse de lacet de consigne YawRateT est saturée à une valeur égale à l'accélération transversale maximale admissible gammatMax divisée par la vitesse du véhicule V. L'accélération transversale maximale admissible gammatMax est par exemple égale à 12m/s$^2$.

En outre, dans le cas d'un contrebraquage, lorsque l'angle volant av et la vitesse de lacet YawRate sont de signes opposés, l'écart entre la vitesse de lacet de consigne YawRateT et la vitesse de lacet YawRate mesurée est important. L'écart est utilisé par la suite dans une deuxième boucle de régulation fermée BF2 pour déterminer le premier couple correctif de patinage C_RL_bf2 et le deuxième couple correctif de patinage C_RR_bf2. Afin de garantir la stabilité de la deuxième boucle de régulation fermée BF2, la vitesse de lacet de consigne YawRateT est saturée à 0 afin d'empêcher un glissement différentiel entre les deux roues arrière 3, 4.

Durant une étape 51, les moyens de détection 21 déterminent une première différence entre la valeur absolue de la vitesse de consigne de lacet YawRateT et la valeur absolue de la vitesse de lacet YawRate.

Si la première différence est supérieure à un seuil (étape 52), le véhicule 1 est en sous-virage, et les moyens de détection 21 assignent la valeur 2 à un paramètre vUSOS indicatif du caractère survireur ou sous-vireur du véhicule 1 (étape 53).

Si la première différence est supérieure à un seuil (étape 52), le véhicule 1 est en survirage, et les moyens de détection 21 assignent la valeur 1 au paramètre vUSOS.

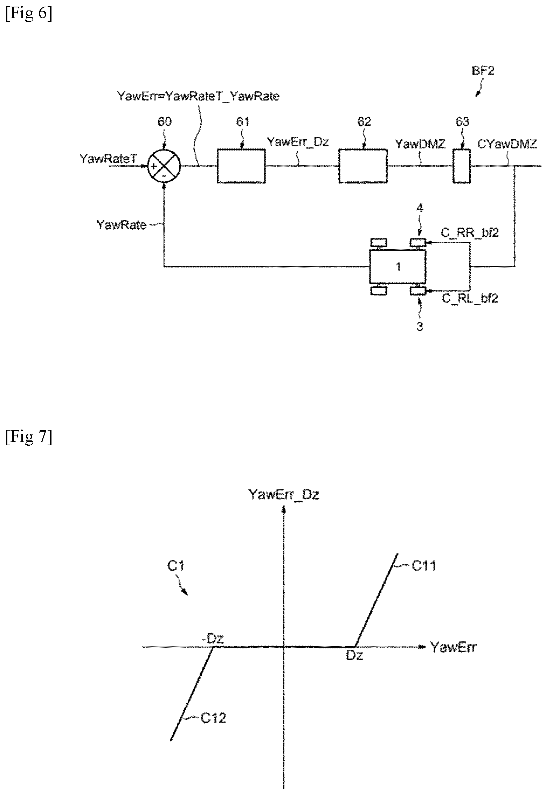

Les troisièmes moyens de génération 22 comprennent une deuxième boucle de régulation fermée BF2 illustrée à la figure 6 pour générer le premier couple correctif de patinage CYawDMZ.

La deuxième boucle de régulation fermée BF2 comporte un sommateur 60, un module de conditionnement 61, un régulateur 62 du type proportionnel dérivateur, et un module de conversion 63.

Le coefficient proportionnel du régulateur 62 est déterminé à partir de tables prédéterminées reliant ledit coefficient à la vitesse V, à l'accélération transversale gammat et au caractère sur/sous-vireur du véhicule 1 (paramètre vUSOS).

Les tables et le gain de l'action dérivateur sont par exemple déterminés empiriquement par des essais réalisés sur le véhicule 1.

La vitesse de consigne de lacet YawRateT est appliquée sur une entrée d'addition du sommateur 60 et la vitesse de lacet YawRate mesurée par le capteur de vitesse de rotation 7 est appliquée sur une entrée de soustraction du sommateur 60.

Une sortie du sommateur 60 délivre au module de conditionnement 61 une deuxième différence YawErr égale à la différence entre la vitesse de consigne de lacet YawRateT et la vitesse de lacet YawRate.

Le module de conditionnement 61 comprend une courbe C1 illustré à la figure 7 de sorte que lorsque la deuxième différence YawErr est incluse dans un intervalle de détection défini par deux seuils de détection égaux -Dz, Dz, le module de conditionnement 61 délivre une valeur nulle désactivant la deuxième boucle de régulation BF2 et les premier et deuxième couples correctifs de patinage C_RL_bf2, C_RR_bf2 sont nuls.

Lorsque la deuxième différence YawErr est supérieure au seuil Dz (courbe C11), le module 61 délivre au régulateur 62 la valeur :

$$YawErr\_Dz = YawErr - Dz \quad (24)$$

et lorsque la deuxième différence YawErr est inférieure au seuil -Dz (courbe C12), le module 61 délivre au régulateur 62 la valeur :

$$YawErr\_Dz = YawErr + Dz \quad (25)$$

La valeur du seuil de détection Dz déterminée à partir de tables prédéterminées reliant ledit seuil à la vitesse V, à l'accélération transversale gammat et au caractère sur/sous-vireur du véhicule 1 (paramètre vUSOS), les tables étant déterminées empiriquement.

Les deux seuils -Dz et Dz sont de valeur égale.

En variante, les deux seuils de détection peuvent être de valeurs différentes.

Le module de conditionnement 61 permet d'activer la deuxième boucle de régulation fermée BF2 lorsque le véhicule 1 présente un comportement sur-ou sous-vireur significatif quantifié par la valeur du seuil de détection Dz de sorte que la deuxième boucle BF2 ne s'active pas lors de la détection de fluctuations de trajectoire du véhicule 1 de sorte que le système 5 ne dégrade pas inutilement les performances du véhicule 1.

Lorsque le module 61 délivre une valeur non nulle au régulateur 62, le régulateur 62 détermine un moment de lacet de correction YawDMZ et le module de conversion 63 convertit le moment de lacet de correction YawDMZ en un couple de correction de patinage CYawDMZ selon :

$$CYawDMZ = \frac{2}{T} \cdot YawDMZ \cdot Rwheel \quad (26)$$

Le couple de correction de patinage CYawDMZ est déterminé par le régulateur 62 de sorte que la deuxième différence YawErr est nulle.

Les troisièmes moyens de génération 22 sélectionnent l'une des roues arrière 3, 4 sur laquelle est destinée à être soustrait le couple correctif de patinage CYawDMZ en fonction du survirage ou du sous-virage du véhicule (paramètre vUSOS) et de l'accélération transversale gammat du véhicule 1.

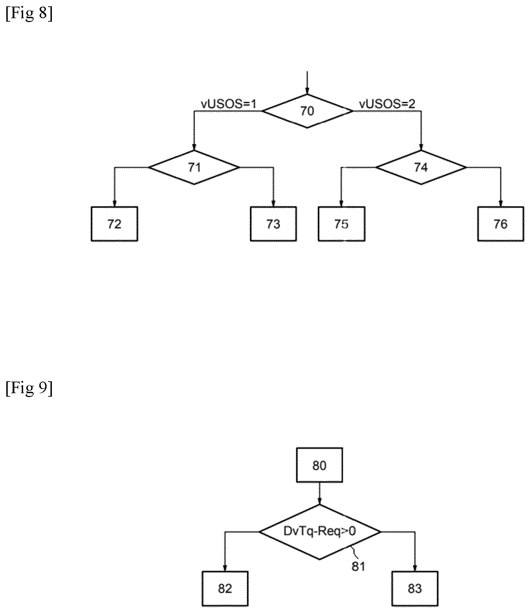

Les troisièmes moyens de génération 22 déterminent la roue arrière 3, 4 intérieure au virage et de la roue extérieure 4, 3 au virage en fonction du signe de l'accélération transversale gammat et en fonction du survirage ou du sous-virage du véhicule (paramètre vUSOS) (figure 8).

Si le véhicule 1 est survireur (vUSOS =1) (étape 70), et l'accélération transversale gammat est positive selon l'axe de référence orienté vers la gauche du véhicule 1 dans le sens normal de roulage (étape 71), la roue arrière extérieure est la roue arrière droite coïncidente avec la deuxième roue arrière 4 dans le sens normal de roulage du véhicule 1. Les troisièmes moyens de génération 22 assignent la valeur nulle au premier couple de patinage C_RL_bf2 et la valeur absolue du couple de correction de patinage CYawDMZ au deuxième couple de patinage C_RR_bf2 (étape 72).

Si le véhicule 1 est survireur (vUSOS =1) (étape 70), et l'accélération transversale gammat est négative selon l'axe de référence orienté vers la gauche du véhicule 1 dans le sens normal de roulage (étape 71), la roue arrière extérieure est la roue arrière gauche coïncidente avec la première roue arrière 3 dans le sens normal de roulage du véhicule 1. Les troisièmes moyens de génération 22 assignent la valeur nulle au deuxième couple de patinage C_RR_bf2 et la valeur absolue du couple de correction de patinage CYawDMZ au premier couple de patinage C_RL_bf2 (étape 73).

Si le véhicule 1 est sous_vireur (vUSOS =2) (étape 70), et l'accélération transversale gammat est positive selon l'axe de référence orienté vers la gauche du véhicule 1 dans le sens normal de roulage (étape 74), la roue arrière intérieure est la roue arrière gauche coïncidente avec la première roue arrière 3 dans le sens normal de roulage du véhicule 1. Les troisièmes moyens de génération 22 assignent la valeur nulle au deuxième couple de patinage C_RR_bf2 et la valeur absolue du couple de correction de patinage CYawDMZ au premier couple de patinage C_RL_bf2 (étape 75).

Si le véhicule 1 est sous_vireur (vUSOS =2) (étape 70), et l'accélération transversale gammat est négative selon l'axe de référence orienté vers la gauche du véhicule 1 dans le sens normal de roulage (étape 74), la roue arrière intérieure est la roue arrière droite coïncidente avec la deuxième roue arrière 4 dans le sens normal de roulage du véhicule 1. Les troisièmes moyens de génération 22 assignent la valeur absolue du couple de correction de patinage CYawDMZ au deuxième couple de patinage C_RR_bf2 et la valeur nulle au premier couple de patinage C_RL_bf2 (étape 76).

La deuxième boucle de régulation BF2 retire une partie du couple sur l'une des roues arrière selon le caractère sur/sous-vireur du véhicule 1 dans un virage en phase d'accélération pour empêcher le patinage des roues arrière afin d'améliorer la stabilité du véhicule 1.

Les moyens de détermination 23 déterminent la première consigne de couple corrigée C_RRL et la deuxième consigne de couple corrigée C_RRR.

Durant une étape 80, les moyens de détermination 23 calculent une première consigne intermédiaire cons1 égal

à :

$$cons1 = C\_RL - C\_RL\_bf1 - C\_RL\_bf2 \quad (27)$$

et une deuxième consigne intermédiaire cons2 égal à :

$$cons2 = C\_RR - C\_RR\_bf1 - C\_RR\_bf2 \quad (28)$$

Si le véhicule est en phase de décélération (DvTq-Req<0), durant l'étape 82, les moyens de détermination 23 déterminent la première consigne de couple corrigée C_RRL et la deuxième consigne de couple corrigée C_RRR de sorte que :

$$C\_RRL = \min\left(\max(cons1, Cmin13), 0\right) \quad (29)$$

$$C\_RRR = \min(max(cons2, Cmin14), 0) \quad (30)$$

Si le véhicule est en phase d'accélération (DvTq-Req>0), durant l'étape 83, les moyens de détermination 23 déterminent la première consigne de couple corrigée C_RRL et la deuxième consigne de couple corrigée C_RRR de sorte que :

$$C\_RRL = \max\left(\min(cons1, Cmax13), 0\right) \quad (31)$$

$$C\_RRR = \max(min(cons2, Cmax14), 0) \quad (32)$$

Les moyens de pilotage 24 pilotent la première machine électrique 13 de sorte qu'elle délivre un couple sur la première roue arrière 3 égal à la première consigne de couple corrigée C_RRL, et la deuxième machine électrique 14 de sorte qu'elle délivre un couple sur la deuxième roue arrière 3 égal à la deuxième consigne de couple corrigée C_RRR.
Le pilotage des machines électriques 13, 14 à partir des consignes de couple corrigées C_RRL et C_RRR permet de conférer de l'agilité au véhicule électrique 1 tout en garantissant sa stabilité indépendamment de la trajectoire du véhicule 1.

## Revendications

1. Procédé de vectorisation de couple entre deux roues (3, 4) d'un pont arrière (2) d'un véhicule automobile électrique (1) disposées de part et d'autre du véhicule et entraînées chacune par un moteur électrique pour répartir un couple entre les deux roues, comprenant :

   - la génération d'une première consigne de couple (C_RL) appliquée sur une première roue (3) entraînée par un premier moteur électrique (13) à partir d'une consigne de couple d'accélération (DvTq-Req) du véhicule, de la vitesse du véhicule (V), de l'angle volant (av), de la distance (T) entre les deux roues, de l'accélération transversale (gammat) du véhicule, et des caractéristiques de couple (Cmin13, Cmax13) développé par le premier moteur électrique (13), et la génération d'une deuxième consigne de couple (C_RR) appliquée sur la deuxième roue (4) entraînée par le deuxième moteur électrique (14) à partir d'une consigne de couple d'accélération (DvTq-Req) du véhicule, de la vitesse du véhicule (V), de l'angle volant (av), de la distance (T) entre les deux roues, de l'accélération transversale (gammat) du véhicule, et des caractéristiques de couple (Cmin14, Cmax14) développé par le deuxième moteur électrique (14),
   - la génération d'un premier couple correctif de glissement (C_RL_bf1) destiné à être appliqué sur la première roue (3) et d'un deuxième couple correctif de glissement (C_RR_bf1) destiné à être appliqué sur la deuxième roue (4) pour supprimer un glissement relatif entre les deux roues à partir de la distance (T) entre les roues, la vitesse de lacet (YawRate) du véhicule, le régime de chaque moteur électrique, le rapport cinématique (kgear) de pont arrière et le type de pneumatique monté sur les roues,
   - la détection du survirage ou du sous-virage du véhicule dans un virage en phase d'accélération à partir d'une consigne de vitesse de lacet (YawRateT) et de la vitesse de lacet,
   - la génération d'un premier couple correctif de patinage (C_RL_bf2) destiné à être appliqué sur la première roue et un deuxième couple correctif de patinage (C_RR_bf2) destiné à être appliqué sur la deuxième roue pour neutraliser le survirage ou le sous-virage du véhicule à partir de la consigne de vitesse de lacet, de la vitesse de lacet et de l'accélération transversale du véhicule,
- la détermination d'une première consigne de couple corrigée (C_RRL) à partir de la première consigne de couple, du premier couple correctif de glissement et du premier couple correctif de patinage, et la détermination d'une deuxième consigne de couple corrigée (C_RRR) à partir de la deuxième consigne de couple, du deuxième couple correctif de glissement et du deuxième couple correctif de patinage, et
- le pilotage de la première machine électrique à partir de la première consigne de couple corrigée et le pilotage de la deuxième machine électrique à partir de la deuxième consigne de couple corrigée.

2. Procédé selon la revendication 1, dans lequel la génération d'un premier couple correctif de glissement (C_RL_bf1) et d'un deuxième couple correctif de glissement (C_RR_bf1)comprend la régulation d'un couple correctif de glissement (CorrPi) en boucle fermée à partir d'un écart entre un coefficient d'Ackermann (Acker) égal à la distance (T) entre les deux roues multipliée par la vitesse de lacet (YawRate) du véhicule et l'écart de vitesse entre les deux roues de sorte que l'écart soit nul ($\varepsilon$), les premier et deuxième couples correctifs de glissement étant déterminés à partir du couple correctif de glissement lorsque l'écart est nul, l'écart de vitesse étant déterminé à partir de la distance entre les roues, du régime de chaque moteur électrique, du rapport de pont arrière et du type de pneumatique monté sur les roues.

3. Procédé selon l'une des revendications 1 et 2, dans lequel la détection du survirage ou du sous-virage du véhicule dans un virage et en phase d'accélération comprend :

- la détermination d'une consigne de vitesse de lacet (YawRateT) à partir d'un modèle de bicyclette du véhicule,
- la détermination d'une première différence entre la valeur absolue de la vitesse de consigne de lacet et la valeur absolue de la vitesse de lacet(YawRate),
- la comparaison de la première différence à un seuil, et
- la détermination du survirage ou du sous-virage du véhicule selon le résultat de la comparaison.

4. Procédé selon la revendication 3, dans lequel si la première différence est supérieure ou égale au seuil, le véhicule est sous-vireur, et si la différence est inférieure au seuil, le véhicule est survireur.

5. Procédé selon l'une des revendications 3 et 4, dans lequel la génération des premier et deuxième couples correctifs de patinage (C_RL_bf2, C_RR_bf2) comprend la détermination d'une deuxième différence entre la vitesse de consigne de lacet (YawRateT) et la vitesse de lacet (YawRate),

- si la deuxième différence est incluse dans un intervalle de détection défini par deux seuils de détection (-Dz, Dz) de signe opposé ou le véhicule n'est pas en phase d'accélération, les premier et deuxième couples correctifs de patinage sont nuls,
- si la deuxième différence n'est pas incluse dans l'intervalle de détection, le procédé comprend :

  ○ la régulation en boucle fermée d'un couple de correction de patinage (CYawDMZ) à partir de la deuxième différence de sorte que le deuxième écart soit nul, un couple correctif de patinage étant égal au couple de correction lorsque la deuxième différence est nulle, et
  ○ la sélection de l'une des roues arrières (3, 4) sur laquelle est destinée à être soustrait le couple de correction de patinage en fonction du survirage ou du sous-virage du véhicule et de l'accélération transversale (gammat) du véhicule, le premier couple correctif de patinage (C_RL_bf2) étant égal au couple correctif de patinage et le deuxième couple correctifs de patinage (C_RR_bf2) étant nul si la première roue est sélectionnée, et inversement si la deuxième roue est sélectionnée.

6. Procédé selon la revendication 5, dans lequel la sélection de la roue arrière sur laquelle est soustrait le couple correctif de patinage (CYawDMZ) comprend la détermination de la roue arrière intérieure au virage et de la roue extérieure au virage en fonction du signe de l'accélération transversale (gammat) dans laquelle si l'accélération transversale est positive selon un axe de référence orienté vers la gauche du véhicule dans le sens normal de roulage, la roue arrière extérieure est la roue arrière droite coïncidente avec la deuxième roue dans le sens normal de roulage du véhicule et la roue arrière intérieure est la roue arrière gauche coïncidente avec la première roue, et inversement si l'accélération transversale est négative selon l'axe de référence, le couple correctif de patinage étant destiné à être soustrait à la roue extérieure si le véhicule est survireur et à la roue intérieure si le véhicule est sous-vireur.

7. Procédé selon l'une des revendications 1 à 6, dans lequel la détermination d'une première consigne de couple corrigée et la détermination d'une deuxième consigne de couple corrigée comprend :

- le calcul d'une première consigne intermédiaire (cons1) égal à la soustraction du premier couple correctif de glissement (C_RL_bf1) et du premier couple correctif de patinage (C_RL_bf2) à la première consigne de couple (C_RL),
- le calcul d'une deuxième consigne intermédiaire (cons2) égal à la soustraction du deuxième couple correctif de glissement (C_RR_bf2) et du deuxième couple correctif de patinage à la deuxième consigne de couple (C_RR), et dans lequel :
- si le véhicule est dans une phase d'accélération, la détermination d'une première valeur minimale entre la première consigne intermédiaire (cons1) et la valeur de couple maximale (Cmax13) délivrée par le premier moteur électrique (13), puis la détermination d'une première valeur maximale entre la première valeur minimale et zéro, la première consigne de couple corrigée (C_RRL) étant égale à la première valeur maximale, et la détermination d'une deuxième valeur minimale entre la deuxième consigne intermédiaire (cons2) et la valeur de couple maximale (Cmax14) délivrée par le deuxième moteur électrique (14), puis la détermination d'une deuxième valeur maximale entre la deuxième valeur minimale et zéro, la deuxième consigne de couple corrigée (C_RRR) étant égale à la deuxième valeur maximale,
- si le véhicule est dans une phase de décélération, la détermination d'une première valeur maximale entre la première consigne intermédiaire (cons1) et la valeur de couple minimale (Cmin14) délivrée par le premier moteur électrique (14), puis la détermination d'une première valeur minimale entre la première valeur maximale et zéro, la première consigne de couple corrigée (C_RRL) étant égale à la première valeur minimale, et la détermination d'une deuxième valeur maximale entre la deuxième consigne intermédiaire (cons2) et la valeur de couple minimale (Cmin14) délivrée par le deuxième moteur électrique (14), puis la détermination d'une deuxième valeur minimale entre la deuxième valeur maximale et zéro, la deuxième consigne de couple corrigée (C_RRR) étant égale à la deuxième valeur minimale.

8. Système (5) de vectorisation de couple entre deux roues (3, 4) d'un pont arrière (2) d'un véhicule automobile électrique disposées de part et d'autre du véhicule et entraînées chacune par un moteur électrique pour répartir un couple entre les deux roues, comprenant :

- des premiers moyens de génération (19) d'une première consigne de couple (C_RL) appliqué sur une première roue (3) entraînée par un premier moteur électrique (13) à partir d'une consigne de couple d'accélération (DvTq-Req) du véhicule, de la vitesse du véhicule (V), de l'angle volant (av), de la distance (T) entre les deux roues, de l'accélération transversale (gammat) du véhicule, et des caractéristiques de couple (Cmin13, Cmax13) développé par le premier moteur électrique (13), et la génération d'une deuxième consigne de couple (C_RR) appliqué sur la deuxième roue (4) entraînée par le deuxième moteur électrique (14) à partir d'une consigne de couple d'accélération (DvTq-Req) du véhicule, de la vitesse (V) du véhicule, de l'angle volant (av), de la distance (T) entre les deux roues, de l'accélération transversale (gammat) du véhicule, et des caractéristiques de couple (Cmin14, Cmax14) développé par le deuxième moteur électrique (14),
- des deuxièmes moyens de génération (20) d'un premier couple correctif de glissement (C_RL_bf1) destiné à être appliqué sur le premier moteur électrique (3) et d'un deuxième couple correctif de glissement (C_RR_bf1) destiné à être appliquer sur le deuxième moteur électrique (4) pour supprimer un glissement relatif entre les deux roues à partir de la distance (T) entre les roues (3, 4), la vitesse de lacet (YawRate) du véhicule, le régime de chaque moteur électrique, le rapport de pont (T) arrière et le type de pneumatique monté sur les roues (3, 4),
- des moyens de détection (21) du survirage ou du sous-virage du véhicule en phase d'accélération dans un virage à partir d'une consigne de vitesse de lacet (YawRateT) et de la vitesse de lacet (YawRate),
- des troisièmes moyens de génération (22) d'un premier couple correctif de patinage (C_RL_bf2) destiné à être appliqué sur la première roue (3) et un deuxième couple correctif de patinage (C_RR_bf2) destiné à être appliqué sur la deuxième roue (4) pour neutraliser le survirage ou le sous-virage du véhicule à partir de la consigne de vitesse de lacet (YawRateT), de la vitesse de lacet (YawRate) et de l'accélération transversale (gammat) du véhicule,
- des moyens de détermination (23) d'une première consigne de couple corrigée (C_RRL) à partir de la première consigne de couple (C_RL), du premier couple correctif de glissement (C_RL_bf1) et du premier couple correctif de patinage (C_RL_bf2), et la détermination d'une deuxième consigne de couple corrigée (C_RRR) à partir de la deuxième consigne de couple (C_RR), du deuxième couple correctif de glissement (C_RR_bf1) et du deuxième couple correctif de patinage (C_RR_bf2), et
- des moyens de pilotage (24) de la première machine électrique à partir de la première consigne de couple corrigée (C_RRL) et le pilotage de la deuxième machine électrique à partir de la deuxième consigne de couple corrigée (C_RRR).

**9.** Véhicule automobile électrique (1) comportant un pont arrière (2) muni de deux roues (3, 4) disposées de part et d'autre du véhicule, deux moteurs électriques (13, 14) entraînant chacun une roue arrière (3, 4), et un système (5) de vectorisation de couple selon la revendication 8 relié aux deux moteurs électriques.

**Patentansprüche**

**1.** Verfahren zur Drehmomentvektorisierung zwischen zwei Rädern (3, 4) einer Hinterachse (2) eines Elektrokraftfahrzeugs (1), die zu beiden Seiten des Fahrzeugs angeordnet sind und jeweils von einem Elektromotor angetrieben werden, um ein Drehmoment zwischen den beiden Rädern zu verteilen, umfassend:

- das Erzeugen eines ersten Drehmomentsollwerts (C_RL), der auf ein erstes Rad (3) angewendet wird, das von einem ersten Elektromotor (13) angetrieben wird, ausgehend von einem Beschleunigungsdrehmomentsollwert (DvTq-Req) des Fahrzeugs, von der Geschwindigkeit des Fahrzeugs (V), vom Lenkradwinkel (av), vom Abstand (T) zwischen den beiden Rädern, von der Querbeschleunigung (gammat) des Fahrzeugs und von den Drehmomenteigenschaften (Cmin13, Cmax13) des von dem ersten Elektromotor (13) entwickelten Drehmoments, und das Erzeugen eines zweiten Drehmomentsollwerts (C_RR), der auf das zweite Rad (4) angewendet wird, das von dem zweiten Elektromotor (14) angetrieben wird, ausgehend von einem Beschleunigungsdrehmomentsollwert (DvTq-Req) des Fahrzeugs, von der Geschwindigkeit des Fahrzeugs (V), vom Lenkradwinkel (av), vom Abstand (T) zwischen den beiden Rädern, von der Querbeschleunigung (gammat) des Fahrzeugs und von den Drehmomenteigenschaften (Cmin14, Cmax14) des von dem zweiten Elektromotor (14) entwickelten Drehmoments,
- das Erzeugen eines ersten Schlupf korrigierenden Drehmoments (C_RL_bf1), das dazu bestimmt ist, auf das erste Rad (3) angewendet zu werden, und eines zweiten Schlupf korrigierenden Drehmoments (C_RR_bf1), das dazu bestimmt ist, auf das zweite Rad (4) angewendet zu werden, um einen relativen Schlupf zwischen den beiden Rädern zu beseitigen, ausgehend vom Abstand (T) zwischen den Rädern, von der Giergeschwindigkeit (YawRate) des Fahrzeugs, von der Drehzahl jedes Elektromotors, von der kinematischen Hinterachsübersetzung (kgear) und von dem an den Rädern montierten Reifentyp,
- das Detektieren des Übersteuerns oder des Untersteuerns des Fahrzeugs in einer Kurve in der Beschleunigungsphase ausgehend von einem Giergeschwindigkeitssollwert (YawRateT) und von der Giergeschwindigkeit,
- das Erzeugen eines ersten Schleudern korrigierenden Drehmoments (C_RL_bf2), das dazu bestimmt ist, auf das erste Rad angewendet zu werden, und eines zweiten Schleudern korrigierenden Drehmoments (C_RR_bf2), das dazu bestimmt ist, auf das zweite Rad angewendet zu werden, um das Übersteuern oder das Untersteuern des Fahrzeugs zu neutralisieren, ausgehend von dem Giergeschwindigkeitssollwert, von der Giergeschwindigkeit und von der Querbeschleunigung des Fahrzeugs,
- das Bestimmen eines ersten korrigierten Drehmomentsollwerts (C_RRL) ausgehend von dem ersten Drehmomentsollwert, von dem ersten Schlupf korrigierenden Drehmoment und von dem ersten Schleudern korrigierenden Drehmoment und das Bestimmen eines zweiten korrigierten Drehmomentsollwerts (C_RRR) ausgehend von dem zweiten Drehmomentsollwert, von dem zweiten Schlupf korrigierenden Drehmoment und von dem zweiten Schleudern korrigierenden Drehmoment, und
- das Steuern der ersten elektrischen Maschine ausgehend von dem ersten korrigierten Drehmomentsollwert und das Steuern der zweiten elektrischen Maschine ausgehend von dem zweiten korrigierten Drehmomentsollwert.

**2.** Verfahren nach Anspruch 1, wobei das Erzeugen eines ersten Schlupf korrigierenden Drehmoments (C_RL_bf1) und eines zweiten Schlupf korrigierenden Drehmoments (C_RR_bf1) das Regeln eines Schlupf korrigierenden Drehmoments (CorrPi) im Regelkreis ausgehend von einer Abweichung zwischen einem Ackermann-Koeffizienten (Acker) gleich dem Abstand (T) zwischen den beiden Rädern multipliziert mit der Giergeschwindigkeit (YawRate) des Fahrzeugs und der Geschwindigkeitsabweichung zwischen den beiden Rädern umfasst, so dass die Abweichung null ($\varepsilon$) ist, wobei die ersten und zweiten Schlupf korrigierenden Drehmomente ausgehend von dem Schlupf korrigierenden Drehmoment bestimmt werden, wenn die Abweichung null ist, wobei die Geschwindigkeitsabweichung ausgehend von dem Abstand zwischen den Rädern, von der Drehzahl jedes Elektromotors, von der Hinterachsübersetzung und von dem an den Rädern montierten Reifentyp bestimmt wird.

**3.** Verfahren nach einem der Ansprüche 1 und 2, wobei die Detektion des Übersteuerns oder des Untersteuerns des Fahrzeugs in einer Kurve und in der Beschleunigungsphase umfasst:

- das Bestimmen eines Giergeschwindigkeitssollwerts (YawRateT) ausgehend von einem Fahrradmodell des Fahrzeugs,
- das Bestimmen einer ersten Differenz zwischen dem absoluten Wert der Giersollgeschwindigkeit und dem absoluten Wert der Giergeschwindigkeit (YawRate),
- das Vergleichen der ersten Differenz mit einem Schwellenwert, und
- das Bestimmen des Übersteuerns oder des Untersteuerns des Fahrzeugs je nach dem Ergebnis des Vergleichs.

4. Verfahren nach Anspruch 3, wobei, wenn die erste Differenz größer oder gleich dem Schwellenwert ist, das Fahrzeug untersteuert, und wenn die Differenz kleiner als der Schwellenwert ist, das Fahrzeug übersteuert.

5. Verfahren nach einem der Ansprüche 3 und 4, wobei das Erzeugen der ersten und zweiten Schleudern korrigierenden Drehmomente (C_RL_bf2, C_RR_bf2) das Bestimmen einer zweiten Differenz zwischen der Giersollgeschwindigkeit (YawRateT) und der Giergeschwindigkeit (YawRate) umfasst,

- wenn die zweite Differenz in einem Detektionsintervall enthalten ist, das durch zwei Detektionsschwellenwerte (-Dz, Dz) mit entgegengesetztem Vorzeichen definiert wird, oder das Fahrzeug nicht in der Beschleunigungsphase ist, die ersten und zweiten Schleudern korrigierenden Drehmomente null sind,
- wenn die zweite Differenz nicht in dem Detektionsintervall enthalten ist, das Verfahren umfasst:

  ◦ das Regeln im Regelkreis eines Schleudern korrigierenden Drehmoments (CYawDMZ) ausgehend von der zweiten Differenz, so dass die zweite Abweichung null ist, wobei ein Schleudern korrigierendes Drehmoment gleich dem Korrekturdrehmoment ist, wenn die zweite Differenz null ist, und
  ◦ das Auswählen des einen der Hinterräder (3, 4), von dem das Schleudern korrigierende Drehmoment subtrahiert werden soll, in Abhängigkeit von dem Übersteuern oder Untersteuern des Fahrzeugs und von der Querbeschleunigung (gammat) des Fahrzeugs, wobei das erste Schleudern korrigierende Drehmoment (C_RL_bf2) gleich dem Schleudern korrigierenden Drehmoment ist und wobei das zweite Schleudern korrigierende Drehmoment (C_RR_bf2) null ist, wenn das erste Rad ausgewählt ist, und umgekehrt, wenn das zweite Rad ausgewählt ist.

6. Verfahren nach Anspruch 5, wobei das Auswählen des Hinterrads, von dem das Schleudern korrigierende Drehmoment (CYawDMZ) subtrahiert wird, das Bestimmen des kurveninneren Hinterrads und des kurvenäußeren Hinterrads in Abhängigkeit von dem Vorzeichen der Querbeschleunigung (gammat) umfasst, wobei, wenn die Querbeschleunigung entlang einer zur linken Seite des Fahrzeugs in normaler Fahrtrichtung ausgerichteten Referenzachse positiv ist, das äußere Hinterrad das rechte Hinterrad ist, das in normaler Fahrtrichtung dem zweiten Rad entspricht, und das innere Hinterrad das linke Hinterrad ist, das dem ersten Rad entspricht, und umgekehrt, wenn die Querbeschleunigung entlang der Referenzachse negativ ist, wobei das Schleudern korrigierende Drehmoment dazu bestimmt ist, von dem äußeren Rad subtrahiert zu werden, wenn das Fahrzeug übersteuert, und von dem inneren Rad, wenn das Fahrzeug untersteuert.

7. Verfahren nach einem der Ansprüche 1 bis 6, wobei das Bestimmen eines ersten korrigierten Drehmomentsollwerts und das Bestimmen eines zweiten korrigierten Drehmomentsollwerts umfasst:

   - das Berechnen eines ersten Zwischensollwerts (cons1) gleich der Subtraktion des ersten Schlupf korrigierenden Drehmoments (C_RL_bf1) und des ersten Schleudern korrigierenden Drehmoments (C_RL_bf2) von dem ersten Drehmomentsollwert (C_RL),
   - das Berechnen eines zweiten Zwischensollwerts (cons2) gleich der Subtraktion des zweiten Schlupf korrigierenden Drehmoments (C_RR_bf2) und des zweiten Schleudern korrigierenden Drehmoments von dem zweiten Drehmomentsollwert (C_RR), und wobei:
   - wenn das Fahrzeug in einer Beschleunigungsphase ist, das Bestimmen eines ersten minimalen Werts zwischen dem ersten Zwischensollwert (cons1) und dem maximalen Drehmomentwert (Cmax13), der von dem ersten Elektromotor (13) abgegeben wird, dann das Bestimmen eines ersten maximalen Werts zwischen dem ersten minimalen Wert und null, wobei der erste korrigierte Drehmomentsollwert (C_RRL) gleich dem ersten maximalen Wert ist, und das Bestimmen eines zweiten minimalen Werts zwischen dem zweiten Zwischensollwert (cons2) und dem maximalen Drehmomentwert (Cmax14), der von dem zweiten Elektromotor (14) abgegeben wird, dann das Bestimmen eines zweiten maximalen Werts zwischen dem zweiten minimalen Wert und null, wobei der zweite korrigierte Drehmomentsollwert (C_RRR) gleich dem zweiten maximalen Wert ist,
   - wenn das Fahrzeug in einer Verzögerungsphase ist, das Bestimmen eines ersten maximalen Werts zwischen dem ersten Zwischensollwert (cons1) und dem minimalen Drehmomentwert (Cmin14), der von dem ersten Elektromotor (14) abgegeben wird, dann das Bestimmen eines ersten minimalen Werts zwischen dem ersten maximalen Wert und null, wobei der erste korrigierte Drehmomentsollwert (C_RRL) gleich dem ersten minimalen Wert ist, und das Bestimmen eines zweiten maximalen Werts zwischen dem zweiten Zwischensollwert (cons2) und dem minimalen Drehmomentwert (Cmin14), der von dem zweiten Elektromotor (14) abgegeben wird, dann das Bestimmen eines zweiten minimalen Werts zwischen dem zweiten maximalen Wert und null, wobei der zweite korrigierte Drehmomentsollwert (C_RRR) gleich dem zweiten minimalen Wert ist.

8. System (5) zur Drehmomentvektorisierung zwischen zwei Rädern (3, 4) einer Hinterachse (2) eines Elektrokraftfahrzeugs, die zu beiden Seiten des Fahrzeugs angeordnet sind und jeweils von einem Elektromotor angetrieben werden, um ein Drehmoment zwischen den beiden Rädern zu verteilen, umfassend:

- erste Mittel (19) zum Erzeugen eines ersten Drehmomentsollwerts (C_RL), der auf ein erstes Rad (3) angewendet wird, das von einem ersten Elektromotor (13) angetrieben wird, ausgehend von einem Beschleunigungsdrehmomentsollwert (DvTq-Req) des Fahrzeugs, von der Geschwindigkeit des Fahrzeugs (V), vom Lenkradwinkel (av), vom Abstand (T) zwischen den beiden Rädern, von der Querbeschleunigung (gammat) des Fahrzeugs und von den Drehmomenteigenschaften (Cmin13, Cmax13) des von dem ersten Elektromotor (13) entwickelten Drehmoments, und zum Erzeugen eines zweiten Drehmomentsollwerts (C_RR), der auf das zweite Rad (4) angewendet wird, das von dem zweiten Elektromotor (14) angetrieben wird, ausgehend von einem Beschleunigungsdrehmomentsollwert (DvTq-Req) des Fahrzeugs, von der Geschwindigkeit (V) des Fahrzeugs, vom Lenkradwinkel (av), vom Abstand (T) zwischen den beiden Rädern, von der Querbeschleunigung (gammat) des Fahrzeugs und von den Drehmomenteigenschaften (Cmin14, Cmax14) des von dem zweiten Elektromotor (14) entwickelten Drehmoments,
- zweite Mittel (20) zum Erzeugen eines ersten Schlupf korrigierenden Drehmoments (C_RL_bf1), das dazu bestimmt ist, auf den ersten Elektromotor (3) angewendet zu werden, und eines zweiten Schlupf korrigierenden Drehmoments (C_RR_bf1), das dazu bestimmt ist, auf den zweiten Elektromotor (4) angewendet zu werden, um einen relativen Schlupf zwischen den beiden Rädern zu beseitigen, ausgehend von dem Abstand (T) zwischen den Rädern (3, 4), von der Giergeschwindigkeit (YawRate) des Fahrzeugs, von der Drehzahl jedes Elektromotors, von der Hinterachsübersetzung (T) und von dem an den Rädern (3, 4) montierten Reifentyp,
- Mittel (21) zum Detektieren des Übersteuerns oder des Untersteuerns des Fahrzeugs in der Beschleunigungsphase in einer Kurve ausgehend von einem Giergeschwindigkeitssollwert (YawRateT) und von der Giergeschwindigkeit (YawRate);
- dritte Mittel (22) zum Erzeugen eines ersten Schleudern korrigierenden Drehmoments (C_RL_bf2), das dazu bestimmt ist, auf das erste Rad (3) angewendet zu werden, und eines zweiten Schleudern korrigierenden Drehmoments (C_RR_bf2), das dazu bestimmt ist, auf das zweite Rad (4) angewendet zu werden, um das Übersteuern oder das Untersteuern des Fahrzeugs zu neutralisieren, ausgehend von dem Giergeschwindigkeitssollwert (YawRateT), von der Giergeschwindigkeit (YawRate) und von der Querbeschleunigung (gammat) des Fahrzeugs,
- Mittel (23) zum Bestimmen eines ersten korrigierten Drehmomentsollwerts (C_RRL) ausgehend von dem ersten Drehmomentsollwert (C_RL), von dem ersten Schlupf korrigierenden Drehmoment (C_RL_bf1) und von dem ersten Schleudern korrigierenden Drehmoment (C_RL_bf2) und zum Bestimmen eines zweiten korrigierten Drehmomentsollwerts (C_RRR) ausgehend von dem zweiten Drehmomentsollwert (C_RR), von dem zweiten Schlupf korrigierenden Drehmoment (C_RR_bf1) und von dem zweiten Schleudern korrigierenden Drehmoment (C_RR_bf2), und
- Mittel (24) zum Steuern der ersten elektrischen Maschine ausgehend von dem ersten korrigierten Drehmomentsollwert (C_RRL) und zum Steuern der zweiten elektrischen Maschine ausgehend von dem zweiten korrigierten Drehmomentsollwert (C_RRR).

9. Elektrokraftfahrzeug (1), umfassend eine Hinterachse (2), die mit zwei Rädern (3, 4) versehen ist, die zu beiden Seiten des Fahrzeugs angeordnet sind, zwei Elektromotoren (13, 14), die jeweils ein Hinterrad (3, 4) antreiben, und ein System (5) zur Drehmomentvektorisierung nach Anspruch 8, das mit den beiden Elektromotoren verbunden ist.

## Claims

1. Method for vectoring torque between two wheels (3, 4) of a rear axle (2) of an electric motor vehicle (1) that are disposed on either side of the vehicle and are each driven by an electric motor for distributing a torque between the two wheels, the method comprising:

- generating a first torque setpoint (C_RL) applied to a first wheel (3) driven by a first electric motor (13) on the basis of an acceleration torque setpoint (DvTq-Req) of the vehicle, the speed (V) of the vehicle, the steering wheel angle (av), the distance (T) between the two wheels, the transverse acceleration (gammat) of the vehicle, and the torque characteristics (Cmin13, Cmax13) supplied by the first electric motor (13), and generating a second torque setpoint (C_RR) applied to the second wheel (4) driven by the second electric motor (14) on the basis of an acceleration torque setpoint (DvTq-Req) of the vehicle, the speed (V) of the vehicle, the steering wheel angle (av), the distance (T) between the two wheels, the transverse acceleration (gammat) of the vehicle, and the torque characteristics (Cmin14, Cmax14) supplied by the second electric motor (14),

- generating a first slip correcting torque (C_RL_bf1) intended for application to the first wheel (3) and a second slip correcting torque (C_RR_bf1) intended for application to the second wheel (4) to eliminate relative slipping between the two wheels on the basis of the distance (T) between the wheels, the yaw rate (YawRate) of the vehicle, the mode of each electric motor, the rear axle kinematic ratio (kgear) and the type of tyre mounted on the wheels,

- detecting oversteer or understeer of the vehicle when cornering during an acceleration phase on the basis of a yaw rate setpoint (YawRateT) and the yaw rate,

- generating a first skid correcting torque (C_RL_bf2) intended for application to the first wheel and a second skid correcting torque (C_RR_bf2) intended for application to the second wheel to neutralize the oversteer or understeer of the vehicle on the basis of the yaw rate setpoint, the yaw rate and the transverse acceleration of the vehicle,

- determining a first corrected torque setpoint (C_RRL) on the basis of the first torque setpoint, the first slip correcting torque and the first skid correcting torque, and determining a second corrected torque setpoint (C_RRR) on the basis of the second torque setpoint, the second slip correcting torque and the second skid correcting torque, and

- controlling the first electric machine on the basis of the first corrected torque setpoint and controlling the second electric machine on the basis of the second corrected torque setpoint.

2. Method according to Claim 1, wherein the generation of a first slip correcting torque (C_RL_bf1) and a second slip correcting torque (C_RR_bf1) comprises closed-loop control of a slip correcting torque (CorrPi) on the basis of a deviation between an Ackermann coefficient (Acker) equal to the distance (T) between the two wheels multiplied by the yaw rate (YawRate) of the vehicle and the speed deviation between the two wheels such that the deviation is zero ($\varepsilon$), the first and second slip correcting torques being determined on the basis of the slip correcting torque when the deviation is zero, the speed deviation being determined on the basis of the distance between the wheels, the mode of each electric motor, the rear axle ratio and the type of tyre mounted on the wheels.

3. Method according to either of Claims 1 and 2, wherein the detection of oversteer or understeer of the vehicle when cornering and during an acceleration phase comprises:

- determining a yaw rate setpoint (YawRateT) on the basis of a bicycle model of the vehicle,
- determining a first difference between the absolute value of the setpoint yaw rate and the absolute value of the yaw rate (YawRate),
- comparing the first difference to a threshold, and
- determining oversteer or understeer of the vehicle depending on the result of the comparison.

4. Method according to Claim 3, wherein if the first difference is greater than or equal to the threshold, the vehicle exhibits understeer, and if the difference is less than the threshold, the vehicle exhibits oversteer.

5. Method according to either of Claims 3 and 4, wherein the generation of the first and second skid correcting torques (C_RL_bf2, C_RR_bf2) comprises determining a second difference between the setpoint yaw rate (YawRateT) and the yaw rate (YawRate),

- if the second difference is within a detection range defined by two detection thresholds (-Dz, Dz) of opposite signs or the vehicle is not in an acceleration phase, the first and second skid correcting torques are zero,
- if the second difference is not within the detection range, the method comprises:

  ◦ closed-loop control of a skid correction torque (CYawDMZ) on the basis of the second difference such that the second deviation is zero, a skid correcting torque being equal to the correction torque if the second difference is zero, and
  ◦ selecting one of the rear wheels (3, 4) on which the skid correction torque is intended to be subtracted as a function of the oversteer or understeer of the vehicle and the transverse acceleration (gammat) of the vehicle, the first skid correcting torque (C_RL_bf2) being equal to the skid correcting torque and the second skid correcting torque (C_RR_bf2) being zero if the first wheel is selected, and conversely if the second wheel is selected.

6. Method according to Claim 5, wherein the selection of the rear wheel on which the skid correcting torque (CYawDMZ) is subtracted comprises determining the rear wheel on the inside of the corner and the wheel on the outside of the corner as a function of the sign of the transverse acceleration (gammat), wherein if the transverse acceleration is positive along a reference axis oriented towards the left of the vehicle in the normal running direction, the outside rear wheel is the right-hand rear wheel coinciding with the second wheel in the normal running direction of the vehicle and the inside rear wheel is the left-hand rear wheel coinciding with the first wheel, and conversely if the transverse acceleration is negative along the reference axis, the skid correcting torque being intended to be subtracted on the outside wheel if the vehicle exhibits oversteer and on the inside wheel if the vehicle exhibits understeer.

7. Method according to one of Claims 1 to 6, wherein the determination of a first corrected torque setpoint and the determination of a second corrected torque setpoint comprises:

- calculating a first intermediate setpoint (cons1) equal to the subtraction of the first slip correcting torque (C_RL_bf1) and the first skid correcting torque (C_RL_bf2) from the first torque setpoint (C_RL),
- calculating a second intermediate setpoint (cons2) equal to the subtraction of the second slip correcting torque (C_RR_bf2) and the second skid correcting torque from the second torque setpoint (C_RR), and wherein:
- if the vehicle is in an acceleration phase, determining a first minimum value between the first intermediate setpoint (cons1) and the maximum torque value (Cmax13) supplied by the first electric motor (13), then determining a first maximum value between the first minimum value and zero, the first corrected torque setpoint (C_RRL) being equal to the first maximum value, and determining a second minimum value between the second intermediate setpoint (cons2) and the maximum torque value (Cmax14) supplied by the second electric motor (14), and then determining a second maximum value between the second minimum value and zero, the second corrected torque setpoint (C_RRR) being equal to the second maximum value,
- if the vehicle is in a deceleration phase, determining a first maximum value between the first intermediate setpoint (cons1) and the minimum torque value (Cmin14) supplied by the first electric motor (14), then determining a first minimum value between the first maximum value and zero, the first corrected torque setpoint (C_RRL) being equal to the first minimum value, and determining a second maximum value between the second intermediate setpoint (cons2) and the minimum torque value (Cmin14) supplied by the second electric motor (14), and then determining a second minimum value between the second maximum value and zero, the second corrected torque setpoint (C_RRR) being equal to the second minimum value.

8. System (5) for vectoring torque between two wheels (3, 4) of a rear axle (2) of an electric motor vehicle that are disposed on either side of the vehicle and are each driven by an electric motor for distributing a torque between the two wheels, the system comprising:

- first generating means (19) for generating a first torque setpoint (C_RL) applied to a first wheel (3) driven by a first electric motor (13) on the basis of an acceleration torque setpoint (DvTq-Req) of the vehicle, the speed (V) of the vehicle, the steering wheel angle (av), the distance (T) between the two wheels, the transverse acceleration (gammat) of the vehicle, and the torque characteristics (Cmin13, Cmax13) supplied by the first electric motor (13), and generating a second torque setpoint (C_RR) applied to the second wheel (4) driven by the second electric motor (14) on the basis of an acceleration torque setpoint (DvTq-Req) of the vehicle, the speed (V) of the vehicle, the steering wheel angle (av), the distance (T) between the two wheels, the transverse acceleration (gammat) of the vehicle, and the torque characteristics (Cmin14, Cmax14) supplied by the second electric motor (14),
- second generating means (20) for generating a first slip correcting torque (C_RL_bf1) intended for application to the first electric motor (3) and a second slip correcting torque (C_RR_bf1) intended for application to the second electric motor (4) to eliminate relative slipping between the two wheels on the basis of the distance (T) between the wheels (3, 4), the yaw rate (YawRate) of the vehicle, the mode of each electric motor, the rear axle ratio (T) and the type of tyre mounted on the wheels (3, 4),
- detecting means (21) for detecting oversteer or understeer of the vehicle during an acceleration phase when cornering on the basis of a yaw rate setpoint (YawRateT) and the yaw rate (YawRate),
- third generating means (22) for generating a first skid correcting torque (C_RL_bf2) intended for application to the first wheel (3) and a second skid correcting torque (C_RR_bf2) intended for application to the second wheel (4) to neutralize the oversteer or understeer of the vehicle on the basis of the yaw rate setpoint (YawRateT), the yaw rate (YawRate) and the transverse acceleration (gammat) of the vehicle,

- determining means (23) for determining a first corrected torque setpoint (C_RRL) on the basis of the first torque setpoint (C_RL), the first slip correcting torque (C_RL_bf1) and the first skid correcting torque (C_RL_bf2), and determining a second corrected torque setpoint (C_RRR) on the basis of the second torque setpoint (C_RR), the second slip correcting torque (C_RR_bf1) and the second skid correcting torque (C_RR_bf2), and

- controlling means (24) for controlling the first electric machine on the basis of the first corrected torque setpoint (C_RRL) and controlling the second electric machine on the basis of the second corrected torque setpoint (C_RRR).

9. Electric motor vehicle (1) having a rear axle (2) provided with two wheels (3, 4) that are disposed on either side of the vehicle, two electric motors (13, 14) each driving a rear wheel (3, 4), and a torque vectoring system (5) according to Claim 8 connected to the two electric motors.

[Fig 1]

[Fig 2]

[Fig 3]

[Fig 4]

BF1

40

$\varepsilon = \text{Acker} - \Delta V$

41

CorrPi

Acker

+
−

$\Delta V$

4

C_RR_bf1

1

C_RL_bf1

3

[Fig 5]

50

51

O    52    N

53    vUSOS = 2         vUSOS = 1    54

[Fig 6]

[Fig 7]

[Fig 8]

[Fig 9]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2611661 A
- EP 2576298 B1

- US 20210046922 A1